# EUROPEAN PATENT APPLICATION

(11) **EP 4 502 980 A1**
(43) Date of publication of application: **05.02.2025**
(21) Application number: 22935121.8
(22) Date of filing: 29.03.2022
(51) Int. Cl.: G08G 1/16, G08G 1/005

(54) **MOBILE BODY CONTROL DEVICE, METHOD FOR CONTROLLING MOBILE BODY, AND STORAGE MEDIUM**

(71) Applicant: HONDA MOTOR CO., LTD., Minato-ku Tokyo 107-8556 (JP)
(72) Inventor: MATSUNAGA Hideki, Wako-shi, Saitama 351-0193 (JP); MATSUMOTO Takashi, Wako-shi, Saitama 351-0193 (JP); WAKAYAMA Ryoji, Wako-shi, Saitama 351-0193 (JP); AIZAWA Koki, Wako-shi, Saitama 351-0193 (JP); SHIRAKATA Kento, Wako-shi, Saitama 351-0193 (JP); KURAMITSU Yunosuke, Wako-shi, Saitama 351-0193 (JP)
(74) Representative: Weickmann & Weickmann PartmbB
(86) International application number: PCT/JP2022/015381
(87) International publication number: WO 2023/187969

(57) **Abstract**

A control device for a mobile object that is able to move in both a roadway and a predetermined area other than the roadway includes: a road type recognizing unit configured to recognize whether the mobile object is moving in the roadway or in the predetermined area on the basis of an output of a sensing device for sensing circumstances of the mobile object; an acquisition unit configured to acquire auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal; a traffic signal recognizing unit configured to recognize traffic information which is the permission of progress or the instruction of stop indicated by signaling of the pedestrian signal using the auxiliary information acquired by the acquisition unit; and a control unit configured to control the mobile object on the basis of the traffic information of the pedestrian signal recognized by the traffic signal recognizing unit when the mobile object is located in the predetermined area.

## Description

### [Technical Field]

The present invention relates to a control device for a mobile object, a control method for a mobile object, and a storage medium.

### [Background Art]

In the related art, a system that collects sound on the right and left sides of a personal mobility and senses which of the right and left sides of the personal mobility is a roadway from the collected sound is disclosed (for example, see Patent Document 1).

### [Citation List]

### [Patent Document]

[Patent Document 1]
Japanese Unexamined Patent Application, First Publication No. 2020-197387

### [Summary of Invention]

### [Technical Problem]

However, since the system does not consider a state of a pedestrian signal, a mobile object may not be able to be controlled in some circumstances.

The present invention was made in consideration of the aforementioned circumstances, and an objective thereof is to provide a control device for a mobile object, a control method for a mobile object, and a storage medium with which control of a mobile object based on circumstances can be realized.

### [Solution to Problem]

A control device for a mobile object, a control method for a mobile object, and a storage medium according to the present invention employ the following configurations.
(1) A control device for a mobile object according to an aspect of the present invention is a control device for a mobile object that is able to move in both a roadway and a predetermined area other than the roadway, the control device including: a road type recognizing unit configured to recognize whether the mobile object is moving in the roadway or in the predetermined area on the basis of an output of a sensing device for sensing circumstances of the mobile object; an acquisition unit configured to acquire auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal; a traffic signal recognizing unit configured to recognize traffic information which is the permission of progress or the instruction of stop indicated by signaling of the pedestrian signal using the auxiliary information acquired by the acquisition unit; and a control unit configured to control the mobile object on the basis of the traffic information of the pedestrian signal recognized by the traffic signal recognizing unit when the mobile object is located in the predetermined area.
(2) In the aspect of (1), the auxiliary information is an alarm sound for a visually impaired person which is output according to the traffic information of the pedestrian signal.
(3) In the aspect of (1) or (2), the auxiliary information is traffic information of a traffic signal that permits progress of a traffic participant in a direction different from a direction in which the focused pedestrian signal permits progress of a traffic participant.
(4) In any one of the aspects of (1) to (3), the auxiliary information is information indicating a motion of a person who is estimated to move on the basis of the traffic information indicated by the focused pedestrian signal or information indicating a motion of a person near the mobile object.
(5) In any one of the aspects of (1) to (4), the auxiliary information is an alarm sound for a visually impaired person which is output according to the traffic information of the pedestrian signal and information indicating a motion of a person who is estimated to move on the basis of the traffic information indicated by the focused pedestrian signal or information indicating a motion of a person near the mobile object. The traffic signal recognizing unit recognizes whether the focused pedestrian signal permits progress using the alarm sound for a visually impaired person and the information indicating a motion of a person. The control unit controls the mobile object on the basis of a recognition result from the traffic signal recognizing unit.
(6) In any one of the aspects of (1) to (5), the auxiliary information is an alarm sound for a visually impaired person which is output according to the traffic information of the pedestrian signal and traffic information of a traffic signal that permits progress of a traffic participant in a direction different from a direction in which the focused pedestrian signal permits progress of a traffic participant. The traffic signal recognizing unit recognizes whether the focused pedestrian signal permits progress using the alarm sound for a visually impaired person and the traffic information of the signal that permits progress in the different direction. The control unit controls the mobile object on the basis of a recognition result from the traffic signal recognizing unit.
(7) In any one of the aspects of (1) to (6), the auxiliary information is information indicating a motion of a person who is estimated to move on the basis of the traffic information indicated by the focused pedestrian signal or information indicating a motion of a person near the mobile object and traffic information of a traffic signal that permits progress in a direction different from a direction in which the focused pedestrian signal permits progress. The traffic signal recognizing unit recognizes whether the focused pedestrian signal permits progress using the information indicating a motion of a person and the traffic information of the traffic signal that permits progress in the different direction. The control unit controls the mobile object on the basis of a recognition result from the traffic signal recognizing unit.
(8) In any one of the aspects of (1) to (7), the auxiliary information is (1) an alarm sound for a visually impaired person which is output according to the traffic information of the pedestrian signal, (2) information indicating a motion of a person who is estimated to move on the basis of the traffic information indicated by the focused pedestrian signal or information indicating a motion of a person near the mobile object, or (3) traffic information of a traffic signal that permits progress in a direction different from a direction in which the focused pedestrian signal permits progress. The traffic signal recognizing unit recognizes that a pedestrian signal near the mobile object has switched from a first state for the instruction of stop to a second state for the permission of progress on the basis of one or more pieces of information of (1), (2), and (3) and recognizes whether the focused pedestrian signal has switched to the second state or whether a pedestrian signal other than the focused pedestrian signal has switched to the second state on the basis of information other than the information used when switching to the second state has been recognized out of information of (1), (2), and (3)..
(9) In any one of the aspects of (1) to (8), the auxiliary information is an alarm sound for a visually impaired person which is output according to the traffic information of the pedestrian signal, and the traffic signal recognizing unit recognizes the traffic information of the pedestrian signal on the basis of an alarm sound stored in a storage device with reference to information in which a type of the alarm sound and a direction in which the pedestrian signal permits progress of a traffic participant are correlated.
(10) In any one of the aspects of (1) to (9), the control unit limits a speed of the mobile object when the mobile object moves in the roadway to a first speed and limits the speed of the mobile object when the mobile object moves in the predetermined area to a second speed lower than the first speed, and the control unit performs an operation for moving the mobile object in a direction in which the pedestrian signal permits progress when the mobile object is scheduled to move according to the traffic information of the focused pedestrian signal and the traffic signal recognizing unit recognizes that the focused pedestrian signal permits progress.
(11) In any one of the aspects of (1) to (10), when the mobile object moves according to the traffic information of a first pedestrian signal for regulating traffic in a first direction at a crossroad including the first pedestrian signal and a second pedestrian signal for regulating traffic in a second direction different from the first direction, the traffic signal recognizing unit recognizes a state of the first pedestrian signal on the basis of one or more pieces of information of an alarm sound for a visually impaired person which is output according to traffic information of the pedestrian signals, the traffic information of a traffic signal other than the first pedestrian signal, and information indicating a motion of a person who is estimated to move on the basis of the traffic information indicated by the first pedestrian signal or information indicating a motion of a person near the mobile object which is the auxiliary information. The control unit moves the mobile object according to a state of the first pedestrian signal when the traffic signal recognizing unit recognizes that the first pedestrian signal has switched to a state in which the first pedestrian signal permits progress.
(12) In any one of the aspects of (1) to (11), the acquisition unit acquires the traffic information of the focused pedestrian signal on the basis of the output of the sensing device, and the traffic signal recognizing unit acquires the traffic information of the pedestrian signal using the auxiliary information when the acquisition unit is not able to acquire the traffic information.
(13) In the aspect of (12), the control unit controls the mobile object on the basis of a recognition result from the traffic signal recognizing unit and then causes the mobile object to enter a road or a pedestrian crossing in which progress is permitted by the traffic information from the walkway in which the mobile object is located and to cross the road or the pedestrian crossing when the acquisition unit acquires the traffic information of the focused pedestrian signal and it is recognized that the focused pedestrian signal permits progress.
(14) A control method for a mobile object according to another aspect of the present invention is a control method for a mobile object that is performed by a control device for a mobile object that is able to move in both a roadway and a predetermined area other than the roadway, the control method including: recognizing whether the mobile object is moving in the roadway or in the predetermined area on the basis of an output of a sensing device for sensing circumstances of the mobile object; acquiring auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal; recognizing the permission of progress or the instruction of stop indicated by signaling of the pedestrian signal using the acquired auxiliary information; and controlling the mobile object on the basis of the recognized state of the traffic information of the pedestrian signal when the mobile object is located in the predetermined area.
(15) A storage medium storing a program according to another aspect of the present invention stores a program causing a control device for a mobile object that is able to move in both a roadway and a predetermined area other than the roadway to perform: recognizing whether the mobile object is moving in the roadway or in the predetermined area on the basis of an output of a sensing device for sensing circumstances of the mobile object; acquiring auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal; recognizing the permission of progress or the instruction of stop indicated by signaling of the pedestrian signal using the acquired auxiliary information; and controlling the mobile object on the basis of the recognized state of the traffic information of the pedestrian signal when the mobile object is located in the predetermined area.

### [Advantageous Effects of Invention]

According to the aspects of (1) to (15), it is possible to realize control of a mobile object based on circumstances.

According to the aspect of (8), the control device can rapidly perform preparation for moving the mobile object and rapidly move the mobile object by recognizing that traffic information of a traffic signal has changed and then identifying the changed traffic signal.

According to the aspect of (9), the control device can more accurately identify a traffic signal of which traffic information has changed using a type of alarm sound.

### [Brief Description of Drawings]

FIG. 1 is a diagram illustrating an example of a configuration of a mobile object 1 and a control device 100 according to an embodiment.
FIG. 2 is a perspective view of a mobile object 1 when seen from above.
FIG. 3 is a diagram illustrating an example of a situation in which a mobile object 1 is moving on a roadway.
FIG. 4 is a diagram illustrating an example of a situation in which traffic information of a pedestrian signal cannot be recognized.
FIG. 5 is a diagram illustrating processing of a traffic signal recognizing unit 150 using auxiliary information.
FIG. 6 is a diagram illustrating a process using an alarm sound for a visually impaired person or another traffic signal.
FIG. 7 is a diagram illustrating a process using motions of persons.
FIG. 8 is a flowchart illustrating an example of a process flow that is performed by the control device 100.
FIG. 9 is a diagram illustrating an example of a situation in which the mobile object 1 is crossing a pedestrian crossing at a crossroad.
FIG. 10 is a diagram illustrating an example of conditions for recognizing switching to a second state and a traffic signal switched to the second state.
FIG. 11 is a flowchart illustrating an example of a process flow that is performed by the control device 100.
FIG. 12 is a diagram illustrating an example of traffic signal information 76.
FIG. 13 is a diagram illustrating an example of a situation in which a traffic signal recognizing unit 150 controls a mobile object 1 using the traffic signal information 76.

### [Description of Embodiments]

Hereinafter, a control device for a mobile object, a control method for a mobile object, and a storage medium according to an embodiment of the present invention will be described with reference to the accompanying drawings.

Hereinafter, a control device for a mobile object, a control method for a mobile object, and a storage medium according to an embodiment of the present invention will be described with reference to the accompanying drawings. A mobile object can move on both a roadway and a predetermined area other than the roadway. The mobile object may also be referred to as a micromobility. An electric scooter is a type of micromobility. The predetermined area is, for example, a walkway. The mobile object may be a vehicle which an occupant can board or an autonomous mobile object that can perform autonomous traveling in an unmanned manner. The autonomous mobile object in the latter is used, for example, for transporting luggage or the like. The mobile object may include, for example, a micromobility for transporting luggage while traveling in parallel with a walking user or leading a person or may include other mobile objects (for example, a walking robot) that can perform autonomous movement. The predetermined area may be some or all of a roadside strip, a bicycle lane, and a public open space and may include all of a walkway, a roadside strip, a bicycle lane, and a public open space. In the following description, it is assumed that the predetermined area is a walkway. In the following description, a "walkway" can be appropriately replaced with a "predetermined area."

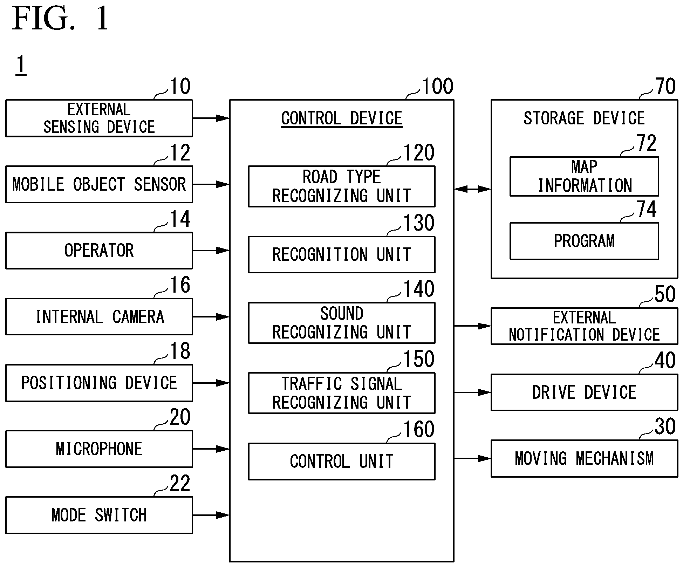

FIG. 1 is a diagram illustrating an example of a configuration of a mobile object 1 and a control device 100 according to an embodiment. The mobile object 1 is provided with, for example, an external sensing device 10, a mobile object sensor 12, an operator 14, an internal camera 16, a positioning device 18, a microphone 20, a mode switch 22, a moving mechanism 30, a drive device 40, an external notification device 50, a storage device 70, and a control device 100. Some constituents which are not essential to realizing functions of the present invention out of the constituents may be omitted.

The external sensing device 10 includes various devices that can sense a moving direction of the mobile object 1. The external sensing device 10 includes an external camera, a radar device, a LIDAR (Light Detection and Ranging) device, and a sensor fusion device. The external sensing device 10 outputs information indicating sensing results (such as an image and a position of an object) to the control device 100.

The mobile object sensor 12 includes, for example, a speed sensor, an acceleration sensor, a yaw rate (angular velocity) sensor, a direction sensor, and an operation amount sensor attached to the operator 14. The operator 14 includes, for example, an operator for instructing acceleration or deceleration (for example, an accelerator pedal or a brake pedal) and an operator for instructing steering (for example, a steering wheel). In this case, the mobile object sensor 12 may include an accelerator operation amount sensor, a brake operation amount sensor, and a steering torque sensor. The mobile object 1 may include an operator (for example, a rotary operator with a shape other than a ring shape, a joystick, or a button) other than described above as the operator 14.

The internal camera 16 images at least the head of an occupant of the mobile object 1 from the front. The internal camera 16 is a digital camera using an imaging device such as a charge-coupled device (CCD) a complementary metal oxide semiconductor (CMOS). The internal camera 16 outputs the captured image to the control device 100.

The positioning device 18 is a device that measures a position of the mobile object 1. The positioning device 18 is, for example, a global navigation satellite system (GNSS) receiver, identifies the position of the mobile object 1 on the basis of signals received from GNSS satellites, and outputs the identified position as position information. The position information of the mobile object 1 may be estimated from a position of a Wi-Fi base station to which a communication device which will be described later is connected. The microphone 20 collects sound near the mobile object 1. The microphone 20 may include a plurality of microphones.

The mode switch 22 is a switch that is operated by an occupant. The mode switch 22 may be a mechanical switch or may be a graphical user interface (GUI) switch that is set on a touch panel. For example, the mode switch 22 receives an operation of switching a driving mode to one of mode A that is an assist mode in which one of a steering operation and an acceleration/deceleration control operation is performed by an occupant and the other thereof is automatically performed and that includes mode A-1 in which the steering operation is performed by an occupant and the acceleration/deceleration control operation is automatically performed and mode A-2 in which the acceleration/deceleration operation is performed by an occupant and the steering control operation is automatically performed, mode B that is a manual driving mode in which the steering operation and the acceleration/deceleration control operation are performed by an occupant, and mode C that is an automatic driving mode in which the steering operation and the acceleration/deceleration control operation are automatically performed.

The moving mechanism 30 is a mechanism for moving the mobile object 1 on a road. The moving mechanism 30 is, for example, a wheel group including a turning wheel and a driving wheel. The moving mechanism 30 may be legs for multi-legged walking.

The drive device 40 moves the mobile object 1 by outputting a force to the moving mechanism 30. For example, the drive device 40 includes a motor that drives driving wheels, a battery that stores electric power to be supplied to the motor, and a steering device that adjusts a steering angle of turning wheels. The drive device 40 may include an internal combustion engine or a fuel cell as a driving force output means and a power generation means. The drive device 40 may further include a brake device using frictional force or air resistance.

The external notification device 50 is, for example, a lamp, a display device, or a speaker that is provided on an external plate member of the mobile object 1 and is used to notify the outside of the mobile object 1 of information. The external notification device 50 performs different operations in a state in which the mobile object 1 is moving on a walkway and a state in which the mobile object 1 is moving on a roadway. For example, the external notification device 50 is controlled such that the lamp emits light when the mobile object 1 is moving on the walkway and the lamp does not emit light when the mobile object 1 is moving on the roadway. An emission color of the lamp can be a color defined in the law. The external notification device 50 may be controlled such that the lamp emits green light when the mobile object 1 is moving on the walkway and the lamp emits blue light when the mobile object 1 is moving on the roadway. When the external notification device 50 is a display device, the external notification device 50 displays a notification indicating "traveling on a walkway" in text or graphics when the mobile object 1 is traveling on the walkway.

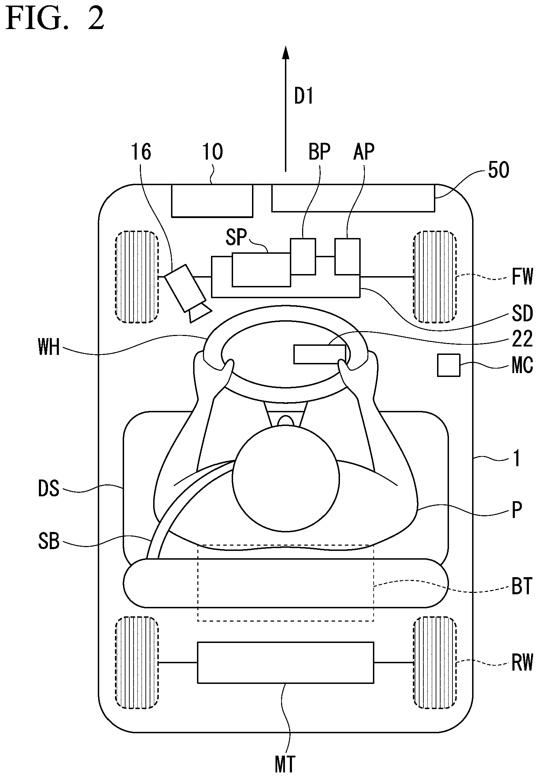

FIG. 2 is a perspective view of a mobile object 1 when seen from above. In the drawing, FW denotes turning wheels, RW denotes driving wheels, SD denotes a steering device, MT denotes a motor, and BT denotes a battery. The steering device SD, the motor MT, and the battery BT are included in the drive device 40. AP denotes an accelerator pedal, BP denotes a brake pedal, WH denotes a steering wheel, SP denotes a speaker, and MC denotes a microphone. The mobile object 1 illustrated in the drawing is a single-seated mobile object, and an occupant P sits on a driver's seat DS and wears a seat belt SB. An arrow D1 is a traveling direction (a speed vector) of the mobile object 1. The external sensing device 10 is installed in the vicinity of the front end of the mobile object 1, the internal camera 16 is installed at a position at which the head of the occupant P can be imaged from the front of the occupant P, and the mode switch 22 is installed in a boss part of the steering wheel WH. The external notification device 50 which is a display device is provided in the vicinity of the front end of the mobile object 1.

Referring back to FIG. 1, the storage device 70 is, for example, a non-transitory storage device such as a hard disk drive (HDD), a flash memory, or a random access memory (RAM). Map information 72, a program 74 that is executed by the control device 100, and the like are stored in the storage device 70. The storage device 70 is located outside of the control device 100 in the drawing, but the storage device 70 may be included in the control device 100. The storage device 70 may be provided in a server which is not illustrated.

### [Control device]

The control device 100 includes, for example, a road type recognizing unit 120, a recognition unit 130, a sound recognizing unit 140, a traffic signal recognizing unit 150, and a control unit 160. These constituents are realized, for example, by causing a hardware processor such as a central processing unit (CPU) to execute the program (software) 74. Some or all of these constituents may be realized by hardware (a circuit unit including circuitry) such as a large scale integration (LSI) device, an application-specific integrated circuit (ASIC), a field-programmable gate array (FPGA), or a graphics processing unit (GPU) or may be cooperatively realized by software and hardware. The program may be stored in the storage device 70 in advance or may be stored in a detachable storage medium (a non-transitory storage medium) such as a DVD or a CD-ROM and installed in the storage device 70 by setting the storage medium into a drive device.

The road type recognizing unit 120 recognizes whether the mobile object 1 is moving on a roadway or on a walkway. The road type recognizing unit 120 recognizes whether the mobile object 1 is moving on a roadway or on a walkway, for example, by analyzing an image captured by an external camera of the external sensing device 10. Outputs of the radar device, the LIDAR device, the sensor fusion device, or the like may be auxiliarily used.

The road type recognizing unit 120 recognizes whether the mobile object 1 is moving on a roadway or on a walkway on the basis of a plurality of events indicating that the mobile object 1 is moving on a roadway in an image captured by the external camera. For example, the road type recognizing unit 120 classifies pixels in a frame of an image into classes through semantic segmentation, assigns labels to the classes, and considers a plurality of subareas into which the image is virtually divided and boundaries therebetween. The road type recognizing unit 120 classifies at least an area of an image captured by the external camera into a subarea (hereinafter referred to as a host area) in which the mobile object 1 is present and a subarea (hereinafter referred to as a neighboring area) which is neighboring the host area and in which the mobile object 1 is not present and performs processing thereon.

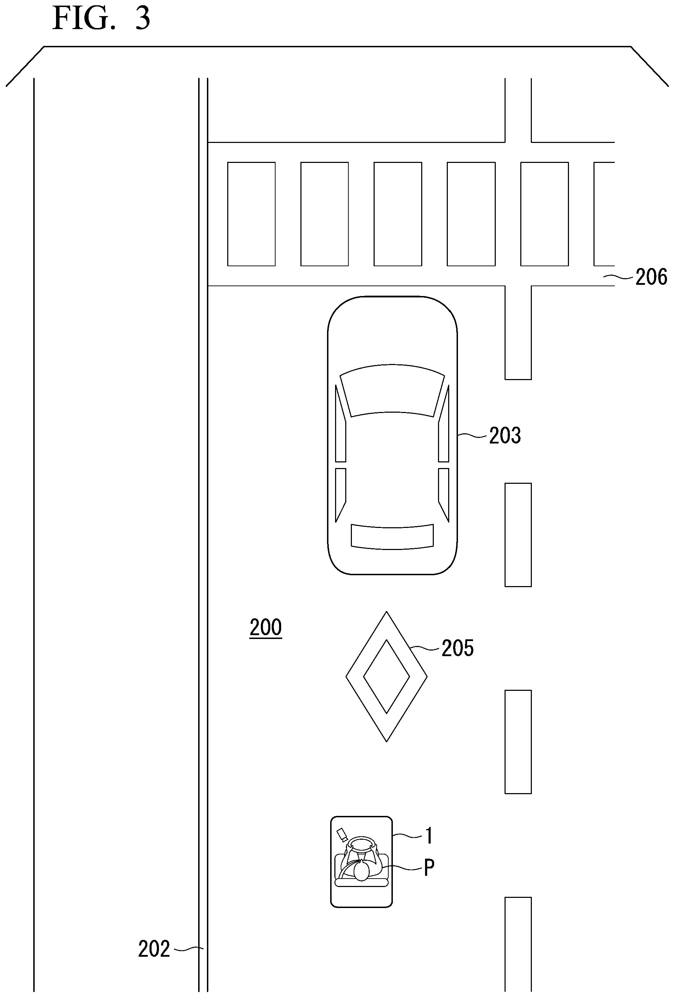

For example, when a predetermined number of events or more out of the following events are included, it may be determined that the mobile object 1 is moving in a roadway. For example, the events include an event in which a stationary obstacle (such as a standing signboard, a mailbox, a utility pole, and a garbage bin) other than a vehicle 203 is not present in the host area 200, an event in which a vehicle 203 is moving in the host area 200, an event in which a road marking 205 is present on the road surface of the host area 200, an event in which a pedestrian crossing 206 is present in the host area 200, and an event in which the host are 200 is located on the lower end of a stepped part 202. FIG. 3 is a diagram illustrating an example of a situation in which a mobile object 1 is moving in a roadway. In FIG. 3 (and other subsequent drawings), a bird's-eye view seen from above is illustrated for the purpose of convenient description, but the processes may be performed on an image plane.

The recognition unit 130 recognizes an object present near the mobile object 1 on the basis of an output of the external sensing device 10. The object includes some or all of mobile objects such as a vehicle, a bicycle, and a pedestrian, travel lane boundaries such as lane markings, stepped parts, guardrails, curbstones, and median strips, structures installed on the road such as road markings or signboards, and obstacles such as objects present (fallen) on a travel lane. The recognition unit 130 acquires information such as presence, a position, and a type of another mobile object by inputting an image captured by the external camera to a trained model which has been trained to output information such as presence, a position, and a type of an object when an image captured by the external camera of the external sensing device 10 is input thereto. A type of another mobile object may be estimated on the basis of a size in an image or intensities of reflected waves received by the radar device of the external sensing device 10. The recognition unit 130 acquires, for example, a speed of another mobile object which has been detected using Doppler shift or the like by the radar device.

The recognition unit 130 recognizes traffic signals including a vehicular traffic signal and a pedestrian signal. The recognition unit 130 recognizes traffic information of signaling of a traffic signal. Traffic information of a traffic signal is information indicating that progress (movement) in a predetermined direction is permitted, information indicating that stop is instructed, or the like. The traffic signal recognizing unit 150 recognizes the traffic information by recognizing a lamp color or an arrow direction of a traffic signal.

The sound recognizing unit 140 acquires sound collected by the microphone 20 and recognizes the acquired sound. The sound recognizing unit 140 recognizes whether the collected sound is equal to or similar to predetermined sound stored in the storage device 70. The predetermined sound is, for example, sound that is output from a pedestrian signal. The sound output from a pedestrian signal is, for example, sound that is output when the pedestrian signal instructs progress. This sound is, for example, sound that is output such that a visually impaired person can recognize traffic information of the pedestrian signal. The sound recognizing unit 140 may recognize a direction or a position from which sound is output using sound localization technology.

The traffic signal recognizing unit 150 recognizes traffic information of a pedestrian signal using auxiliary information which will be described later. When the recognition unit 130 cannot recognize traffic information of a pedestrian signal or a degree of reliability of the recognition result of the traffic information of the pedestrian signal is less than a threshold value, the traffic signal recognizing unit 150 recognizes (or estimates) the traffic information of the pedestrian signal using the auxiliary information. When the degree of reliability is less than the threshold value, for example, it means a state in which the traffic information of the pedestrian signal cannot be recognized or a state in which the traffic information of the pedestrian signal cannot be satisfactorily recognized. For example, when a camera of the external sensing device 10 cannot clearly image a pedestrian signal or traffic information of the traffic signal is not acquired from an image (or when accuracy of image processing is low), the traffic signal recognizing unit 150 cannot recognize the traffic information of the pedestrian signal from the image. In this case, it is determined that the degree of reliability is less than the threshold value.

The control unit 160 controls, for example, the drive device 40 according to a set driving mode. The mobile object 1 may perform only some of the following driving modes, and the control unit 160 sets a speed limit to different values when the mobile object 1 is moving in a roadway and when the mobile object 1 is moving in a walkway. In this case, the mode switch 22 may be omitted.

In mode A-1, the control unit 160 controls the motor MT of the drive device 40 with reference to information of a travel lane and an object based on an output of the recognition unit 130 such that a distance to an object present in front of the mobile object 1 is maintained to be equal to or greater than a predetermined value when the mobile object 1 is moving in a roadway and the mobile object 1 moves at a first speed V1 (for example, a speed equal to or higher than 10 [km/h] and lower than several tens of [km/h]) when the distance to the object present in front of the mobile object 1 is sufficiently long.

The control unit 160 controls the motor MT of the drive device 40 such that a distance to an object present in front of the mobile object 1 is maintained to be equal to or greater than a predetermined value when the mobile object 1 is moving in a walkway and the mobile object 1 moves at a second speed V2 (for example, a speed lower than 10 [km/h]) when the distance to the object present in front of the mobile object 1 is sufficiently long. The relevant function is the same as an adaptive cruise control (ACC) function of a vehicle of which a speed has been set to the first speed V1 or the second speed V2, and a technique used in the ACC can be used. In mode A-1, the control unit 160 controls the steering device SD such that a steering angle of the turning wheels change on the basis of an amount of operation of the operator 14 such as the steering wheel. This function is the same as a function of a power steering device, and a technique used in the power steering device can be used. Instead of using electronic control for steering, the mobile object 1 may include a steering device in which the operator 14 and a steering mechanism are mechanically connected.

In mode A-2, the control unit 160 generates a target trajectory along which the mobile object 1 can move while avoiding an object in a travel lane with reference to information of the travel lane and the object based on the output of the recognition unit 130 and controls the steering device SD of the drive device 40 such that the mobile object 1 moves along the target trajectory. Regarding acceleration and deceleration, the control unit 160 controls the motor MT of the drive device 40 on the basis of a speed of the mobile object 1 and an amount of operation of the accelerator pedal or the brake pedal. The control unit 160 controls the motor MT of the drive device 40 with the first speed V1 as an upper speed limit (which means that the mobile object 1 is not accelerated in spite of an additional acceleration instruction when the mobile object reaches the upper speed limit in mode A-2) when the mobile object 1 is moving in a roadway and controls the drive device 40 with the second speed V2 as the upper speed limit when the mobile object 1 is moving in a walkway.

In mode B, the control unit 160 controls the motor MT of the drive device 40 on the basis of the speed of the mobile object 1 and the amount of operation of the accelerator pedal or the brake pedal. The control unit 160 controls the motor MT of the drive device 40 with the first speed V1 as the upper speed limit (which means that the mobile object 1 is not accelerated in spite of an additional acceleration instruction when the mobile object reaches the upper speed limit in mode B) when the mobile object 1 is moving in a roadway and controls the motor MT of the drive device 40 with the second speed V2 as the upper speed limit when the mobile object 1 is moving in a walkway. Steering is the same as in mode A-1. A mode when the mobile object is moving in a roadway may be referred to as mode B1 (a second movement mode), and a mode when the mobile object is moving in a walkway may be referred to as mode B2 (a first movement mode).

In mode C, the control unit 160 generates a target trajectory along which the mobile object 1 can move while avoiding an object in a travel lane with reference to information of the travel lane and the object based on the output of the recognition unit 130 and controls the drive device 40 such that the mobile object 1 moves along the target trajectory. In mode C, the control unit 160 controls the drive device 40 with the first speed V1 as the upper speed limit when the mobile object 1 is moving in a roadway and controls the drive device 40 with the second speed V2 as the upper speed limit when the mobile object 1 is moving in a walkway.

### [Process when mobile object crosses road]

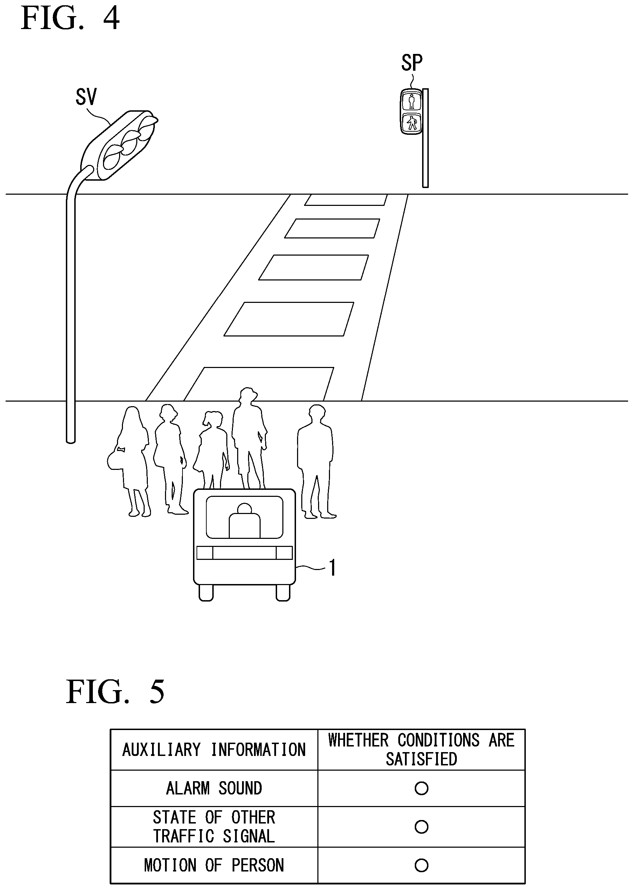

A process that is performed when the mobile object 1 crosses a road in mode C will be described below. FIG. 4 is a diagram illustrating an example of a situation in which traffic information of a pedestrian signal cannot be recognized. For example, it is assumed that the mobile object 1 stops at a walkway to cross a road. In this case, it is assumed that a plurality of traffic participants are present near the mobile object 1 and the mobile object 1 cannot recognize traffic information of a pedestrian signal SP or cannot reliably recognize the traffic information even when the traffic information can be temporarily recognized. In this case, the mobile object 1 determines that the degree of reliability of the recognized traffic information of the pedestrian signal SP is less than a threshold value. For example, when a height of the mobile object 1 is equal to or less than that of the shoulder of a person, traffic information of a vehicular traffic signal SV attached to a high position can be recognized, but the traffic information of the pedestrian signal SP may not be recognized. Therefore, the mobile object 1 performs the following process. For example, the following process is performed when the mobile object 1 is moving in a walkway in mode C.

The traffic signal recognizing unit 150 recognizes traffic information of a pedestrian signal using auxiliary information for recognizing traffic information which is information different from traffic information indicated by signaling of a pedestrian signal on which the mobile object 1 focuses and which is indicated by signaling of a pedestrian signal on the basis of an output of a sensing device for sensing circumstances of the mobile object 1.

For example, the auxiliary information includes one or more pieces of information of (1) to (3).
(1) An alarm sound for a visually impaired person that is output according to traffic information of a pedestrian signal.
(2) Traffic information of a traffic signal (another traffic signal) that permits progress of a traffic participant in a direction different from the direction in which the pedestrian signal on which the mobile object 1 focuses permits progress of a traffic participant.
(3) Information indicating a motion of a person near the focused pedestrian signal or the mobile object 1.

Information (1) is acquired by the sound recognizing unit 140. Information (2) and (3) are acquired by the recognition unit 130. The traffic signal recognizing unit 150 recognizes the traffic information of the focused pedestrian signal on the basis of one or more pieces of traffic information out of the aforementioned information pieces. For example, the traffic signal recognizing unit 150 recognizes that the focused pedestrian signal permits progress or instructs to stop.

When the mobile object 1 is located in a predetermined area, the control unit 160 controls movement of the mobile object 1 on the basis of the traffic information of the pedestrian signal recognized by the traffic signal recognizing unit 150. The predetermined area is, for example, a walkway. Control of the mobile object 1 means that movement of the mobile object is started or that a stop state thereof is maintained. Starting of the movement means, for example, that the mobile object 1 is moved in the walkway. For example, moving of the mobile object means that the mobile object 1 is caused to progress and the mobile object 1 is moved to a position just before the roadway. Controlling of the mobile object 1 may mean, for example, that control for rapidly starting movement of the mobile object 1 is performed. Control for rapidly starting movement of the mobile object 1 is setting a preparation state for starting movement. Examples of the preparation state include supplying electric power to the motor MT, increasing the output power of the motor MT, decreasing a degree of brake of the brake device, and releasing a parking brake.

FIG. 5 is a diagram illustrating processing of the traffic signal recognizing unit 150 using auxiliary information. The traffic signal recognizing unit 150 determines, for example, whether the auxiliary information of (1) to (3) satisfies conditions corresponding to the auxiliary information and recognizes traffic information of a pedestrian signal on the basis of a result of determination. Details thereof will be described below.

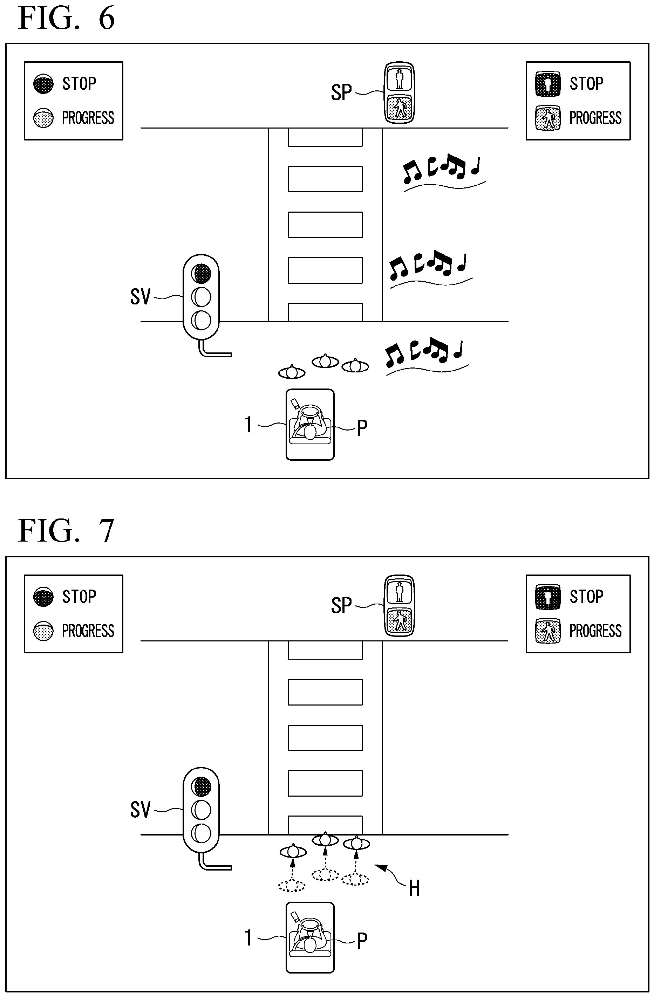

FIG. 6 is a diagram illustrating a process using an alarm sound for a visually impaired person or another traffic signal. When the traffic signal recognizing unit 150 has not recognized traffic information of a pedestrian signal SP and has recognized sound output from the pedestrian signal SP, the traffic signal recognizing unit 150 recognizes that the traffic information of the pedestrian signal SP has switched from a state indicating stop to a state indicating progress. For example, the traffic signal recognizing unit 150 may determine whether the pedestrian signal SP is outputting sound with reference to a position or a direction from which the sound recognized by the sound recognizing unit 140 is output. The traffic signal recognizing unit 150 may recognize that the pedestrian signal instructs progress when sound which is output in a state in which the pedestrian signal SP instructs progress and which is stored in advance in the storage device 70 is being output from the pedestrian signal SP.

The traffic signal recognizing unit 150 may recognize the traffic information of the pedestrian signal SP on the basis of a state of a vehicular traffic signal SV (a traffic signal that permits progress of a traffic participant in a direction different from the direction in which the pedestrian signal focused by the mobile object 1 permits progress of a traffic participant). For example, when the recognition unit 130 has not recognized the traffic information of the pedestrian signal SP and has recognized the traffic information of the vehicular traffic signal SV, the traffic signal recognizing unit 150 recognizes the traffic information of the pedestrian signal SP on the basis of the traffic information of the vehicular traffic signal SV For example, when the vehicular traffic signal SV instructs stop, the traffic signal recognizing unit 150 may recognize that there is a high likelihood that the pedestrian signal SP instructs progress.

FIG. 7 is a diagram illustrating a process using motions of persons. When the traffic information of the pedestrian signal SP cannot be recognized, the traffic signal recognizing unit 150 recognizes that the traffic information has changed from a state indicating that the pedestrian signal SP instructs stop to a state in which the pedestrian signal SP instructs progress on the basis of a motion of a traffic participant near the mobile object 1 or a motion of a traffic participant who is estimated to move on the basis of information indicated by the pedestrian signal SP. A traffic participant near the mobile object 1 is a traffic participant H (for example, a person) which is present within a predetermined distance from the mobile object 1 or in front of the mobile object 1. A traffic participant estimated to move on the basis of information indicated by the pedestrian signal SP is, for example, a traffic participant located in the pedestrian signal SP. A traffic participant located near the mobile object SP is, for example, a traffic participant H (a traffic participant located in a walkway in which the mobile object 1 is located) which is located in a walkway opposite to the walkway in which the pedestrian signal SP is installed with a road interposed therebetween. For example, when the traffic participant H starts movement toward the pedestrian signal SP, the traffic signal recognizing unit 150 recognizes that the pedestrian signal SP has changed from the state indicating stop to the state indicating progress. For example, the participant located near the pedestrian signal SP may be a traffic participant located in the walkway in which the pedestrian signal SP is installed (a traffic participant (not illustrated) located in the walkway opposite to the walkway in which the mobile object 1 is located with a road interposed therebetween) instead (or in addition).

When a predetermined number of conditions or more out of (Condition 1) to (Condition 3) are satisfied, the traffic signal recognizing unit 150 recognizes that the pedestrian signal SP is in the state indicating progress.
(Condition 1) An alarm sound is output.
(Condition 2) Another signal changes to a state indicating stop.
(Condition 3) A nearby traffic participant starts movement according to traffic information indicating progress in the focused pedestrian signal.

The traffic signal recognizing unit 150 may calculate a score as will be described below and recognize that the pedestrian signal SP instructs progress when the calculated score is equal to or greater than a threshold value. For example, when the aforementioned conditions are satisfied, the traffic signal recognizing unit 150 gives points corresponding to the satisfied conditions and weights the given points. The weighting is a weight set for each condition. The score may be added to the aforementioned degree of reliability, and it may be recognized that the pedestrian signal instructs progress when the calculated degree of reliability including the score is equal to or greater than a threshold value.

As described above, when the traffic signal recognizing unit 150 recognizes that the pedestrian signal SP instructs progress, the control unit 160 starts preparation for crossing a road according to the pedestrian signal SP or starts a crossing operation. For example, the control unit 160 causes the mobile object 1 to approach a pedestrian crossing or causes the mobile object 1 to move to before the pedestrian crossing. For example, when the recognition unit 130 actually recognizes traffic information indicating that the pedestrian signal SP instructs progress after this operation has been started, the control unit 160 causes the mobile object 1 to cross a road. The mobile object 1 moves in the walkway and the pedestrian crossing with the second speed V2 as the upper speed limit.

In this way, by controlling the mobile object 1 using a recognition result from the traffic signal recognizing unit 150, the control unit 160 can realize control of the mobile object 1 based on circumstances even when traffic information of a pedestrian signal SP cannot be recognized.

For example, when a traffic participant is present in front of the mobile object 1 or when it cannot be recognized that the pedestrian signal SP instructs progress, the mobile object 1 may not move from that position to interfere with behavior of a following traffic participant even when the front traffic participant starts movement. On the other hand, in this embodiment, since control is started according to the recognition result from the traffic signal recognizing unit 150 as described above, the mobile object 1 rapidly performs movement or starts movement to a position at which the pedestrian signal SP can be easily recognized while securing safety. Accordingly, the mobile object 1 can be expected to recognize the traffic information of the pedestrian signal SP while adapting to surrounding behavior and cross a road while adapting to circumstances.

### [Flowchart]

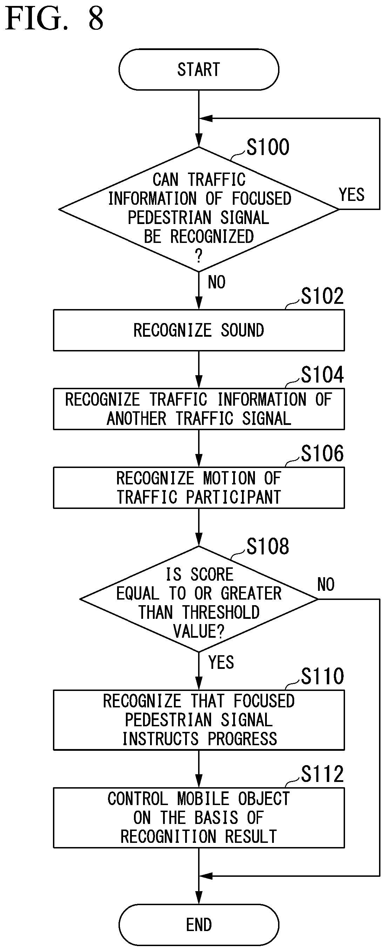

FIG. 8 is a flowchart illustrating an example of a process flow that is performed by the control device 100. First, it is determined whether the recognition unit 130 can recognize traffic information of a focused pedestrian signal (Step S100). When the traffic information of the focused pedestrian signal cannot be recognized, the traffic signal recognizing unit 150 recognizes sound output from the pedestrian signal, traffic information of another traffic signal, or a motion of a traffic participant (Steps S102, S104, and S106).

Then, the traffic signal recognizing unit 150 derives a score on the basis of recognition results of Steps S102 to S106 and determines whether the score is equal to or greater than a threshold value (Step S108). When the score is less than the threshold value, this routine of the flowchart ends.

When the score is equal to or greater than the threshold value, the traffic signal recognizing unit 150 recognizes that the focused pedestrian signal instructs progress (Step S110). Then, the control unit 160 controls the mobile object 1 on the basis of the recognition result from the traffic signal recognizing unit 150 (Step S112). For example, the control device 100 recognizes the traffic information of the pedestrian signal while causing the mobile object 1 to approach a pedestrian crossing and causes the mobile object 1 to cross the pedestrian crossing when a degree of reliability of the traffic information of the pedestrian signal is equal to or greater than a threshold value. Accordingly, this routine of the flowchart ends.

As described above, the control device 100 can realize control of a mobile object based on circumstances by recognizing traffic information of a pedestrian signal using auxiliary information and controlling the mobile object 1 on the basis of the recognition result.

### [Processing at crossing]

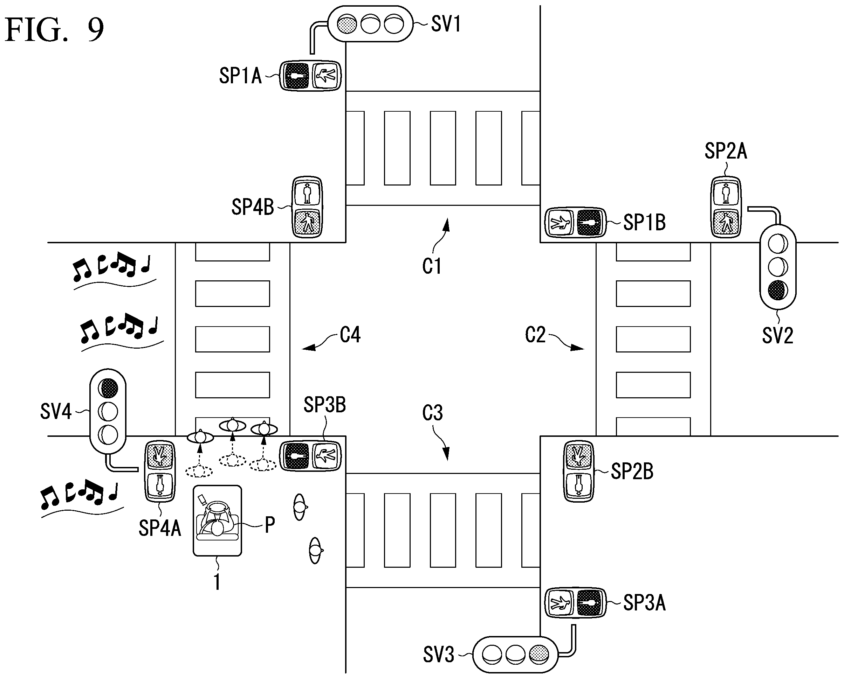

An example in which the mobile object 1 crosses a pedestrian crossing at a crossroad will be described below. FIG. 9 is a diagram illustrating an example of a situation in which the mobile object is crossing a pedestrian crossing at a crossroad. For example, it is assumed that four pedestrian crossings C1 to C4 are installed at a crossroad and a pedestrian signal is provided for each of the pedestrian crossings. Pedestrian signals SP1A and SP1B are provided for the pedestrian crossing C1, ..., and pedestrian signals SP4A and SP4B are provided for the pedestrian crossing C4. The crossroad is provided with vehicular traffic signals SV1 and SV3 for regulating traffic in a first direction and vehicular traffic signals SV2 and SV4 for regulating traffic in a second direction crossing the first direction. For example, it is assumed that the mobile object 1 stops in the vicinity of the pedestrian signal SP4A to cross the pedestrian crossing C4. The mobile object 1 crosses the pedestrian crossing C4 according to traffic information of the pedestrian signals SP4A and SP4B (the pedestrian signals corresponding to the pedestrian crossing C4), but cannot recognize the pedestrian signals SP4A and SP4B due to other traffic participants.

In this case, the traffic signal recognizing unit 150 recognizes traffic information of the focused pedestrian signal SP4B on the basis of sound output from the pedestrian signals SP4A and SP4B (or one of sound output from the pedestrian signal SP4A and sound output from the pedestrian signal SP4B), traffic information of the vehicular traffic signals SV1 to SV4, or states of traffic participants who intend to cross the pedestrian crossing C4.

As described above, the control device 100 can realize control of a mobile object based on circumstances even at a crossroad at which there are a plurality of pedestrian signals by recognizing traffic information of a pedestrian signal using auxiliary information and controlling the mobile object 1 according to the recognition result.

### [Recognition of timing at which traffic information of traffic signal changes and changed traffic signal]

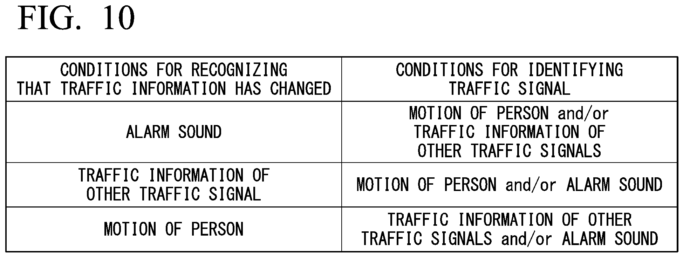

The traffic signal recognizing unit 150 recognizes that a pedestrian signal near the mobile object 1 has changed from a first state in which stop is instructed to a second state in which progress is permitted on the basis of one or more information pieces of (1), (2), and (3) and recognizes whether the focused pedestrian signal has changed to the second state or whether a pedestrian signal other than the focused pedestrian signal has changed to the second state on the basis of information different form the information used to recognize that the pedestrian signal has changed to the second state out of information pieces of (1), (2), and (3). For example, as illustrated in FIG. 10, the traffic signal recognizing unit 150 recognizes a timing at which traffic information of the pedestrian signal has changed on the basis of an alarm sound, traffic information of another traffic signal, or a motion of a person and recognizes the changed pedestrian signal using factors different from factors used to determine the timing. The different factors may be different in some factors and may have common factors.

For example, as illustrated in FIG. 9, the traffic signal recognizing unit 150 recognizes that traffic information of one traffic signal at the crossroad has changed when sound has been recognized and recognizes that traffic information of a pedestrian signal corresponding to a direction in which a traffic participant moves has changed when movement of the traffic participant starts. In FIG. 9, when a traffic participant moves to conform with the traffic information of the pedestrian signal SP4B, the traffic signal recognizing unit 150 recognizes that the traffic information of the pedestrian signal SP4B has changed. When other traffic participants move to conform with the traffic information of the pedestrian signals SP3A and SP3B, the traffic signal recognizing unit 150 recognizes that the traffic information of the pedestrian signal SP4B has not changed. For example, when the vehicular traffic signal SV3 changes to a state indicating progress or the vehicular traffic signal SV4 changes to traffic information indicating stop, the traffic signal recognizing unit 150 may recognize that the traffic information of the pedestrian signal SP4B has changed.

For example, when the traffic signal recognizing unit 150 recognizes that traffic information of a pedestrian signal has changed, the mobile object 1 performs a first operation. The first operation is preparation for movement of the mobile object 1. The preparation is an operation of switching the mode of the mobile object 1 from a mode for a stopped state to a mode for a preparation state. Examples of such a mode include a mode for operating the motor MT, a mode for loosening a degree of brake of the brake device, and a mode for releasing (or preparing release of) a parking brake.

For example, when the traffic signal recognizing unit 150 recognizes that the traffic information of the focused pedestrian signal (a pedestrian signal corresponding to a pedestrian crossing to be crossed) has changed, the mobile object 1 performs a second operation. The second operation is, for example, an operation of moving the mobile object 1 or an operation of switching the mode for a preparation state to the mode for a stopped state. For example, when a traffic signal of which the traffic information has changed is the pedestrian signal SP4B, the control unit 160 moves the mobile object 1 to cross the pedestrian crossing C4. For example, the control device 100 causes the mobile object 1 to approach the pedestrian crossing while following movement of traffic participants.

For example, when a traffic signal of which the traffic information has changed is the pedestrian signal SP3A, the control unit 160 changes the mode thereof from the mode for a preparation state to the mode for a stopped state or moves the mobile object 1 to a position at which a traffic participant crossing the pedestrian crossing C3 is not hindered.

### [Flowchart]

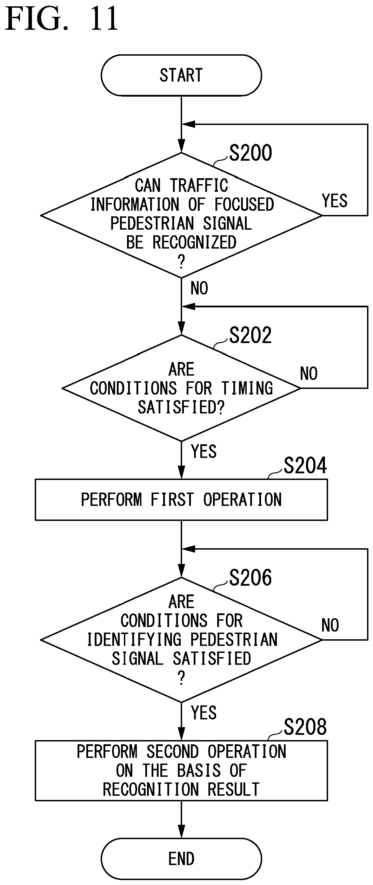

FIG. 11 is a flowchart illustrating an example of a process flow that is performed by the control device 100. First, the recognition unit 130 determines whether the recognition unit 130 can recognize traffic information of a focused pedestrian signal (Step S200). When traffic information of the focused pedestrian signal cannot be recognized, the traffic signal recognizing unit 150 determines that conditions associated with a timing at which traffic information of a pedestrian signal changes have been satisfied (Step S202).

When the conditions associated with a timing at which traffic information of a pedestrian signal changes have been satisfied, the control unit 160 recognizes that the traffic information of the pedestrian signal has changed and performs the first operation (Step S204). Then, the traffic signal recognizing unit 150 determines whether conditions for identifying a pedestrian signal have been satisfied (Step S206). When the conditions for identifying a pedestrian signal have been satisfied, the control unit 160 starts the second operation on the basis of the recognition result from the traffic signal recognizing unit 150 (Step S208). Accordingly, this routine of the flowchart ends.

Through the aforementioned processes, the control device 100 can smoothly perform an operation for moving the mobile object 1 through the first operation and realize control of the mobile object based on circumstances through the second operation.

### <Modified examples>

The traffic signal recognizing unit 150 may recognize traffic information of a traffic signal on the basis of the traffic signal information 76 stored in the storage device 70. The traffic signal information 76 is information in which information on a pedestrian signal at a crossroad and information of sound output from the pedestrian signal are correlated. The information on a pedestrian signal includes, for example, a position of the pedestrian signal, information of a moving direction which is limited by the pedestrian signal, and a moving direction which is permitted when sound is output. The sound output from the pedestrian signal is, for example, sound when the pedestrian signal instructs progress.

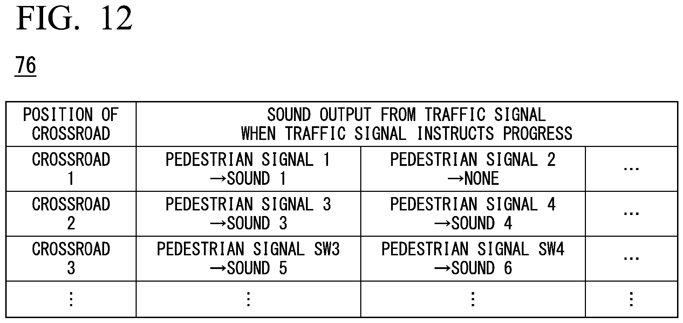

FIG. 12 is a diagram illustrating an example of the traffic signal information 76. For example, a pedestrian signal 1 at a crossroad 1 outputs sound 1, and a pedestrian signal 2 does not output sound 2. For example, a pedestrian signal SW3 at a crossroad 3 outputs sound 5, and a pedestrian signal SW4 outputs sound 6. The traffic signal recognizing unit 150 identifies a pedestrian signal corresponding to sound output from a pedestrian signal and recognized by the sound recognizing unit 140 and a moving direction which is permitted by the pedestrian signal with reference to the traffic signal information 76.

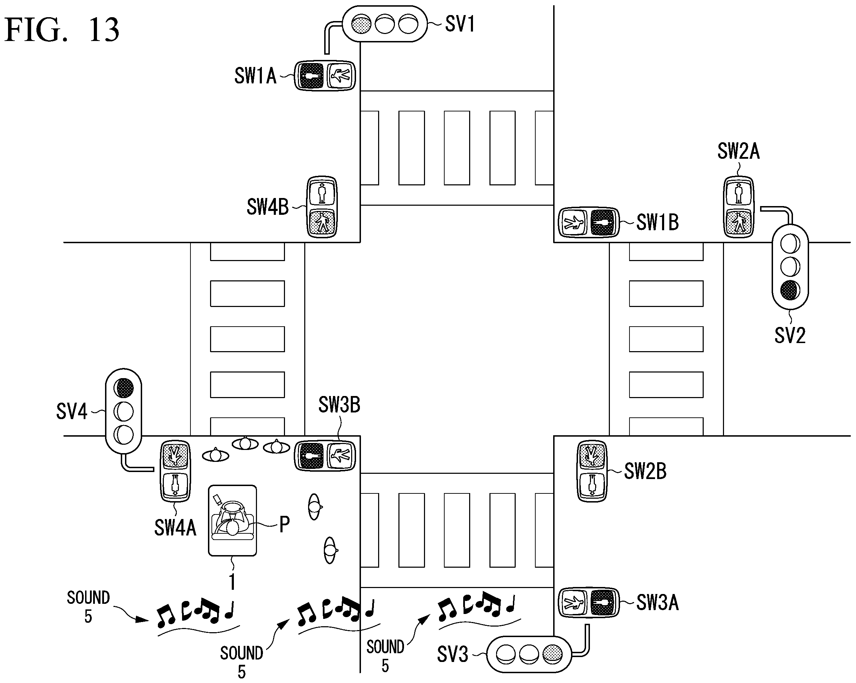

FIG. 13 is a diagram illustrating an example of a situation in which the traffic signal recognizing unit 150 controls the mobile object 1 using the traffic signal information 76. The same as described above with reference to FIG. 9 will be omitted. At a crossroad, the mobile object 1 is scheduled to cross a pedestrian crossing C4 corresponding to a pedestrian signal SW4 when the pedestrian signal SW4B instructs progress. At this time, it is assumed that a pedestrian signal SW3A switches to a state for instructing progress and the pedestrian signal SW3A outputs sound 5. The traffic signal recognizing unit 150 identifies the position of the pedestrian signal correlated with the sound 5 recognized by the sound recognizing unit 140 and the moving direction which is permitted by the pedestrian signal with reference to the traffic signal information 76. The traffic signal recognizing unit 150 recognizes that the pedestrian signal SW3A has changed to a state in which crossing of the pedestrian crossing C3 is permitted. The traffic signal recognizing unit 150 recognizes that the traffic information of the pedestrian signal SW4B corresponding to the pedestrian crossing C4 which the mobile object 1 is scheduled to cross has not changed.

For example, when the traffic signal recognizing unit 150 recognizes sound 6 correlated with the pedestrian signal SW4A after the sound 5 has stopped, the traffic signal recognizing unit 150 recognizes that the pedestrian signal SW4B has changed to a state in which crossing of the pedestrian crossing C4 is permitted. Instead of recognizing, a degree of reliability with which it is recognized that the pedestrian signal SW4B has changed to a state in which crossing of the pedestrian crossing C4 is permitted may be increased, or the aforementioned score may be increased.

As described above, the traffic signal recognizing unit 150 can more accurately recognize traffic information of a pedestrian signal by using the traffic signal information 76.

In the aforementioned example, the mobile object 1 is controlled according to the recognition result of the traffic information in the pedestrian signal in mode C, but the process of controlling the mobile object 1 according to the recognition result of the traffic information of the pedestrian signal may be applied to another mode instead (or in addition). For example, an occupant may be notified that the traffic information of the pedestrian signal has changed, or an operation or acceleration/deceleration may be controlled according to the traffic information of the pedestrian signal.

The control device 100 may recognize traffic information of a traffic signal on the basis of experience information or provided information in addition to (or instead of) auxiliary information. The experience information is information which is generated on the basis of information on a traffic signal acquired when the mobile object 1 or another mobile object 1 has passed through an area in which the traffic signal is installed. The provided information is information on a traffic signal which is provided by a predetermined agency or a server device. The information on a traffic signal includes, for example, a timing at which a traffic signal out of a plurality of traffic signals instructs progress or stop or information of sound which is output from the traffic signal. For example, the experience information or the provided information may include information including a schedule in which traffic information of traffic signals such as information indicating that a second traffic signal instructs progress when a predetermined time has elapsed after a first traffic signal has stopped.

As described above, the control device 100 can realize control of a mobile object according to circumstances by controlling the mobile object 1 using auxiliary information.

The aforementioned embodiment can be mentioned as follows:
A control device for a mobile object comprising:
a storage medium storing computer-readable instructions; and
a processor connected to the storage medium,
wherein the processor executes the computer-readable instructions to perform:
   controlling a mobile object that is able to move in both a roadway and a predetermined area other than the roadway;
   recognizing whether the mobile object is moving in the roadway or in the predetermined area on the basis of an output of a sensing device for sensing circumstances of the mobile object;
   acquiring auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal;
   recognizing the permission of progress or the instruction of stop indicated by signaling of the pedestrian signal using the acquired auxiliary information; and
   controlling the mobile object on the basis of the recognized traffic information of the pedestrian signal when the mobile object is located in the predetermined area.

While an embodiment of the present invention has been described above, the present invention is not limited to the embodiment and can be subjected to various modifications and substitutions without departing from the gist of the present invention.

### [Reference Signs List]

10 External sensing device
12 Mobile object sensor
14 Operator
16 Internal camera
18 Positioning device
20 Microphone
22 Mode switch
30 Moving mechanism
40 Drive device
50 External notification device
70 Storage device
100 Control device
120 Road type recognizing unit
130 Recognition unit
140 Sound recognizing unit
150 Traffic signal recognizing unit
160 Control unit

## Claims

1. A control device for a mobile object that is able to move in both a roadway and a predetermined area other than the roadway, the control device comprising:
a road type recognizing unit configured to recognize whether the mobile object is moving in the roadway or in the predetermined area on the basis of an output of a sensing device for sensing circumstances of the mobile object;
an acquisition unit configured to acquire auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal;
a traffic signal recognizing unit configured to recognize traffic information which is the permission of progress or the instruction of stop indicated by signaling of the pedestrian signal using the auxiliary information acquired by the acquisition unit; and
a control unit configured to control the mobile object on the basis of the traffic information of the pedestrian signal recognized by the traffic signal recognizing unit when the mobile object is located in the predetermined area.

2. The control device for the mobile object according to claim 1, wherein the auxiliary information is an alarm sound for a visually impaired person which is output according to the traffic information of the pedestrian signal.

3. The control device for the mobile object according to claim 1, wherein the auxiliary information is traffic information of a traffic signal that permits progress of a traffic participant in a direction different from a direction in which the focused pedestrian signal permits progress of a traffic participant.

4. The control device for the mobile object according to claim 1, wherein the auxiliary information is information indicating a motion of a person who is estimated to move on the basis of the traffic information indicated by the focused pedestrian signal or information indicating a motion of a person near the mobile object.

5. The control device for the mobile object according to claim 1, wherein the auxiliary information is an alarm sound for a visually impaired person which is output according to the traffic information of the pedestrian signal and information indicating a motion of a person who is estimated to move on the basis of the traffic information indicated by the focused pedestrian signal or information indicating a motion of a person near the mobile object,
wherein the traffic signal recognizing unit recognizes whether the focused pedestrian signal permits progress using the alarm sound for a visually impaired person and the information indicating a motion of a person, and
wherein the control unit controls the mobile object on the basis of a recognition result from the traffic signal recognizing unit.

6. The control device for the mobile object according to claim 1, wherein the auxiliary information is an alarm sound for a visually impaired person which is output according to the traffic information of the pedestrian signal and traffic information of a traffic signal that permits progress of a traffic participant in a direction different from a direction in which the focused pedestrian signal permits progress of a traffic participant,
wherein the traffic signal recognizing unit recognizes whether the focused pedestrian signal permits progress using the alarm sound for a visually impaired person and the traffic information of the signal that permits progress in the different direction, and
wherein the control unit controls the mobile object on the basis of a recognition result from the traffic signal recognizing unit.

7. The control device for the mobile object according to claim 1, wherein the auxiliary information is information indicating a motion of a person who is estimated to move on the basis of the traffic information indicated by the focused pedestrian signal or information indicating a motion of a person near the mobile object and traffic information of a traffic signal that permits progress in a direction different from a direction in which the focused pedestrian signal permits progress,
wherein the traffic signal recognizing unit recognizes whether the focused pedestrian signal permits progress using the information indicating a motion of a person and the traffic information of the traffic signal that permits progress in the different direction, and
wherein the control unit controls the mobile object on the basis of a recognition result from the traffic signal recognizing unit.

8. The control device for the mobile object according to claim 1, wherein the auxiliary information is (1) an alarm sound for a visually impaired person which is output according to the traffic information of the pedestrian signal, (2) information indicating a motion of a person who is estimated to move on the basis of the traffic information indicated by the focused pedestrian signal or information indicating a motion of a person near the mobile object, or (3) traffic information of a traffic signal that permits progress in a direction different from a direction in which the focused pedestrian signal permits progress, and
wherein the traffic signal recognizing unit recognizes that a pedestrian signal near the mobile object has switched from a first state for the instruction of stop to a second state for the permission of progress on the basis of one or more pieces of information of (1), (2), and (3) and recognizes whether the focused pedestrian signal has switched to the second state or whether a pedestrian signal other than the focused pedestrian signal has switched to the second state on the basis of information other than the information used when switching to the second state has been recognized out of information of (1), (2), and (3).

9. The control device for the mobile object according to claim 1, wherein the auxiliary information is an alarm sound for a visually impaired person which is output according to the traffic information of the pedestrian signal, and
wherein the traffic signal recognizing unit recognizes the traffic information of the pedestrian signal on the basis of an alarm sound stored in a storage device with reference to information in which a type of the alarm sound and a direction in which the pedestrian signal permits progress of a traffic participant are correlated.

10. The control device for the mobile object according to claim 1, wherein the control unit limits a speed of the mobile object when the mobile object moves in the roadway to a first speed and limits the speed of the mobile object when the mobile object moves in the predetermined area to a second speed lower than the first speed, and
wherein the control unit performs an operation for moving the mobile object in a direction in which the pedestrian signal permits progress when the mobile object is scheduled to move according to the traffic information of the focused pedestrian signal and the traffic signal recognizing unit recognizes that the focused pedestrian signal permits progress.

11. The control device for the mobile object according to claim 1, wherein, when the mobile object moves according to the traffic information of a first pedestrian signal for regulating traffic in a first direction at a crossroad including the first pedestrian signal and a second pedestrian signal for regulating traffic in a second direction different from the first direction, the traffic signal recognizing unit recognizes a state of the first pedestrian signal on the basis of one or more pieces of information of an alarm sound for a visually impaired person which is output according to the traffic information of the pedestrian signals, the traffic information of a traffic signal other than the first pedestrian signal, and information indicating a motion of a person who is estimated to move on the basis of the traffic information indicated by the first pedestrian signal or information indicating a motion of a person near the mobile object which is the auxiliary information, and
wherein the control unit moves the mobile object according to a state of the first pedestrian signal when the traffic signal recognizing unit recognizes that the first pedestrian signal has switched to a state in which the first pedestrian signal permits progress.

12. The control device for the mobile object according to claim 1, wherein the acquisition unit acquires the traffic information of the focused pedestrian signal on the basis of the output of the sensing device, and
wherein the traffic signal recognizing unit acquires the traffic information of the pedestrian signal using the auxiliary information when the acquisition unit is not able to acquire the traffic information.

13. The control device for the mobile object according to claim 1, wherein the control unit controls the mobile object on the basis of a recognition result from the traffic signal recognizing unit and then causes the mobile object to enter a road or a pedestrian crossing in which progress is permitted by the traffic information from the walkway in which the mobile object is located and to cross the road or the pedestrian crossing when the acquisition unit acquires the traffic information of the focused pedestrian signal and it is recognized that the focused pedestrian signal permits progress.

14. A control method for a mobile object that is performed by a control device for a mobile object that is able to move in both a roadway and a predetermined area other than the roadway, the control method comprising:
recognizing whether the mobile object is moving in the roadway or in the predetermined area on the basis of an output of a sensing device for sensing circumstances of the mobile object;
acquiring auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal;
recognizing the permission of progress or the instruction of stop indicated by signaling of the pedestrian signal using the acquired auxiliary information; and
controlling the mobile object on the basis of the recognized state of the traffic information of the pedestrian signal when the mobile object is located in the predetermined area.

15. A storage medium storing a program, the program causing a control device for a mobile object that is able to move in both a roadway and a predetermined area other than the roadway to perform:
recognizing whether the mobile object is moving in the roadway or in the predetermined area on the basis of an output of a sensing device for sensing circumstances of the mobile object;
acquiring auxiliary information which is information other than traffic information indicating permission of progress and instruction of stop instructed by signaling of a pedestrian signal on which the mobile object focuses and which is indicated by the pedestrian signal and which is used to recognize the permission of progress or the instruction of stop indicated by signaling of the pedestrian signal;
recognizing the permission of progress or the instruction of stop indicated by signaling of the pedestrian signal using the acquired auxiliary information; and
controlling the mobile object on the basis of the recognized state of the traffic information of the pedestrian signal when the mobile object is located in the predetermined area.
